# EUROPÄISCHE PATENTSCHRIFT

(11) **EP 3 710 343 B1**
(45) Veröffentlichungstag und Bekanntmachung des Hinweises auf die Patenterteilung: **07.01.2026**
(21) Anmeldenummer: 18710340.3
(22) Anmeldetag: 21.02.2018
(51) Int. Cl.: B62D 35/02, B61D 17/02, B61F 3/14

(54) **SCHIENENFAHRZEUG**
RAIL VEHICLE
VÉHICULE FERROVIAIRE

(43) Veröffentlichungstag der Anmeldung: 23.09.2020
(73) Patentinhaber: Siemens Mobility Austria GmbH, 1210 Wien (AT)
(72) Erfinder: CZERWINKA, Thomas, 8410 Weitendorf (AT); KREUZWEGER, David, 8501 Lieboch (AT); MOSER, Christian, 8042 Graz (AT); PRIX, Alexander, 8010 Graz (AT); RINGSWIRTH, Jochen, 8020 Graz (AT)
(74) Vertreter: Siemens Patent Attorneys
(86) Internationale Anmeldenummer: PCT/EP2018/054201
(87) Internationale Veröffentlichungsnummer: WO 2019/161888

(56) Entgegenhaltungen:
- EP-A1- 0 030 122
- WO-A1-2014/135416
- DE-A1- 102006 041 163
- DE-A1- 102012 214 606
- DE-A1- 102015 011 518
- DE-A1- 102016 125 704
- FR-A1- 2 961 468
- JP-A- 2012 240 651
- US-A1- 2016 339 972

## Beschreibung

Die Erfindung betrifft ein Schienenfahrzeug mit einer Verkleidungsanordnung.

Zur Erzielung eines geringen Luftwiderstands weisen Fahrzeuge, Fahrwerke, Dächer bzw. Dachaufbauten von Fahrzeugen etc. (z.B. Schienenfahrzeuge, Drehgestelle und Dächer von Schienenfahrzeugen etc.) häufig aerodynamisch geformte Verkleidungen auf. Ein geringer Luftwiderstand ist insbesondere bei hohen Fahrgeschwindigkeiten wichtig, um Energiebedarf bzw. Bedarf an Antriebsleistung und/oder Treibstoffverbrauch des Fahrzeugs möglichst gering zu halten. Nach dem Stand der Technik beschreibt beispielsweise die WO 2014/206643 A1 ein verkleidetes Fahrwerk für ein Schienenfahrzeug. Seitlich an dem Fahrwerk bzw. längs des Schienenfahrzeugs sind Seitenteile der Verkleidung angeordnet. An einer Fahrwerksunterseite ist ein Bodenteil vorgesehen. Die Seitenteile sind mit einem Wagenkasten des Schienenfahrzeugs verbunden, das Bodenteil mit dem Fahrwerk. Zwischen den Seitenelementen und dem Bodenelement ist ein Spalt vorgesehen, wodurch ein Ausdrehen von Rädern ermöglicht wird.

Die FR 2 961 468 A1 zeigt ein Kraftfahrzeug mit einem Unterbodenverkleidungsteil im Bereich eines Fahrzeughecks, welches mit gefederten Komponenten einer Hinterradaufhängung des Kraftfahrzeugs verbunden ist.

Weiterhin ist die DE 10 2009 006 562 A1 bekannt, in der eine Verkleidung für ein Fahrwerk eines Schienenfahrzeugs bzw. ein Schienenfahrzeug mit verkleidetem Fahrwerk offenbart ist. Die Verkleidung umfasst eine das Fahrwerk umschließende Wand sowie einen Unterboden. Der Unterboden ist über Befestigungsmittel mit dem Fahrwerk verbunden.

Die EP 0 030 122 A1 offenbart ein Schienenfahrzeug entsprechend dem Oberbegriff des Anspruchs 1.

Die genannten Ansätze weisen in ihren bekannten Formen den Nachteil auf, dass die offenbarten Verkleidungen mechanisch stark belastet sind.

Der Erfindung liegt daher die Aufgabe zugrunde, eine gegenüber dem Stand der Technik weiterentwickelte, in Bezug auf mechanische Eigenschaften verträglich belastete Verkleidungsanordnung anzugeben.

Erfindungsgemäß wird diese Aufgabe gelöst mit einem Schienenfahrzeug mit einer Verkleidungsanordnung der eingangs genannten Art,
bei der die Lagervorrichtung zumindest ein erstes Lager, ein zweites Lager sowie ein drittes Lager aufweist,
welche mit zumindest einer mit einem ersten Radsatz oder einer ersten Radsatzlagerung des Fahrwerks gekoppelten Komponente verbunden sind,
bei welcher das zumindest erste Verkleidungsteil mittels des zumindest ersten Lagers gelenkig und drehbar bezüglich einer erste Lager-Querachse des Fahrwerks gelagert ist, und
bei welcher das zumindest erste Verkleidungsteil mittels des zweiten Lagers und des dritten Lagers mechanisch entkoppelt bezüglich Bewegungsrichtungen parallel zu einer Fahrwerkslängsebene gelagert ist.

Dadurch wird eine statisch überbestimmte Lagerung der Verkleidungsanordnung auf dem Fahrwerk vermieden und es werden mechanische, auf die Verkleidungsanordnung im Bereich des ersten Lagers, des zweiten Lagers und des dritten Lagers wirkende Belastungen sowie Beanspruchungen der Verkleidungsanordnung reduziert. Die Verkleidungsanordnung kann somit kompakt bzw. dünnwandig und kostengünstig ausgeführt sein.

Die Verkleidungsanordnung bewegt sich aufgrund ihrer Aufhängung an nicht bzw. nur schwach gefederten Komponenten des Fahrwerks mit diesen Komponenten mit. Die Verkleidungsanordnung verursacht somit keine Bewegungseinschränkungen für diese Komponenten bzw. es muss, um eine entsprechende Freigängigkeit dieser Komponenten sicherzustellen, kein zusätzlicher Bauraum zwischen der Verkleidungsanordnung und diesen Komponenten vorgesehen sein.

Erfindungsgemäß weist das zumindest erste Lager zumindest eine erste Schelle auf, mittels welcher das zumindest erste

Verkleidungsteil mit einem ersten Wankstabilisator des Fahrwerks verbunden ist.

Die erste Schelle kann beispielsweise hakenförmig ausgeführt sein und in einen Torsionsstab des ersten Wankstabilisators eingehängt sein. Durch diese Maßnahme fungiert der erste Wankstabilisator als Teil des ersten Lagers, wodurch auf dem Fahrwerk keine spezifischen Vorrichtungen zur Aufhängung der Verkleidungsanordnung vorgesehen sein müssen. Das Fahrwerk kann dadurch trotz der damit verbundenen Verkleidungsanordnung konstruktiv einfach ausgeführt sein. Eine vorteilhafte Ausgestaltung erhält man, wenn das zweite Lager und das dritte Lager als Drahtseildämpfer ausgebildet sind.

Durch diese Maßnahme wird eine starke und gerichtete Dämpfungswirkung bzw. eine effektive Absorption von Stößen zwischen der Verkleidungsanordnung und dem Fahrwerk erzielt.

Eine günstige Lösung wird erzielt, wenn das zumindest erste Verkleidungsteil ausschließlich Versteifungsrippen aufweist, welche annähernd in Richtung einer Verkleidungslängsachse verlaufen.

Dadurch wird einerseits eine vorteilhafte Versteifung des ersten Verkleidungsteils in Richtung der Verkleidungslängsachse erzielt und andererseits eine hohe Nachgiebigkeit des ersten Verkleidungsteils insbesondere bei Biegebelastungen um die Verkleidungslängsachse.

Nachfolgend wird die Erfindung anhand von Ausführungsbeispielen näher erläutert.

Es zeigen beispielhaft:
- Fig. 1:: Eine Seitenansicht eines Ausschnitts aus einem Fahrwerk eines Schienenfahrzeugs mit einer ersten beispielhaften Ausführungsvariante einer erfindungsgemäßen Verkleidungsanordnung mit einem ersten Lager,
- Fig. 2:: Die erste beispielhafte Ausführungsvariante einer dreiteiligen, erfindungsgemäßen Verkleidungsanordnung als Schrägriss mit einem zweiten Lager, einem dritten Lager sowie weiteren Lagern, welche als Zug-Druck-Stangen ausgeführt sind, und
- Fig. 3:: Eine zweite beispielhafte Ausführungsvariante einer dreiteiligen, erfindungsgemäßen Verkleidungsanordnung als Schrägriss mit einem zweiten Lager, einem dritten Lager sowie weiteren Lagern, welche als Drahtseildämpfer ausgeführt sind.

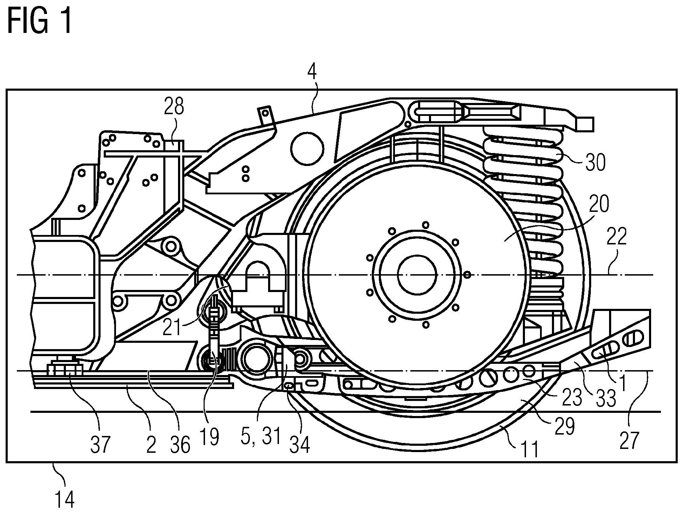

Ein in Fig. 1 in Seitenansicht dargestellter Ausschnitt eines innengelagerten Fahrwerks 4 eines Schienenfahrzeugs weist einen Fahrwerksrahmen 28 sowie einen ersten Radsatz 11 mit einem ersten Rad 29 sowie mit einem in Fig. 1 nicht sichtbaren zweiten Rad auf. Zwischen dem Fahrwerksrahmen 28 und dem ersten Radsatz 11 sind eine erste Radsatzlagervorrichtung mit einem ersten Radsatzlagergehäuse 21 und eine in Fig. 1 nicht sichtbare zweite Radsatzlagervorrichtung mit einem zweiten Radsatzlagergehäuse sowie eine erste Primärfeder 30 und eine nicht sichtbare zweite Primärfeder vorgesehen. Die erste Radsatzlagervorrichtung und die zweite Radsatzlagervorrichtung bilden eine erste Radsatzlagerung des ersten Radsatzes 11.

Mit dem ersten Radsatz 11 ist eine erste Antriebseinheit 20 verbunden.

Das Fahrwerk 4 weist einen nicht dargestellten, hinsichtlich seiner konstruktiven und funktionellen Eigenschaften gleich wie der erste Radsatz 11 ausgeführten zweiten Radsatz auf. Der zweite Radsatz ist mittels einer dritten Radsatzlagervorrichtung und einer vierten Radsatzlagervorrichtung sowie einer dritten Primärfeder und einer vierten Primärfeder, die ebenfalls nicht dargestellt sind, an den Fahrwerksrahmen 28 gekoppelt. Mit dem zweiten Radsatz ist eine nicht gezeigte zweite Antriebseinheit verbunden.

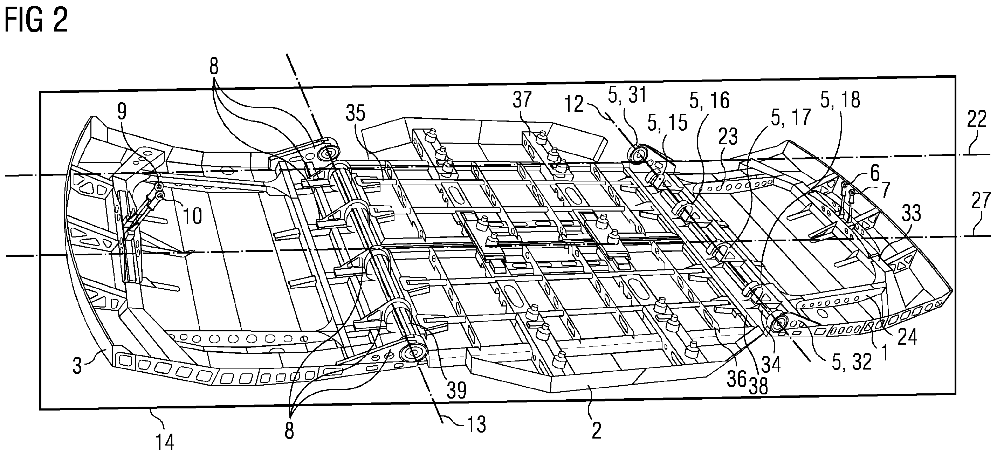

Mit dem Fahrwerk 4 ist mittels einer Lagervorrichtung eine erste beispielhafte Ausführungsvariante einer erfindungsgemäßen, dreiteiligen Verkleidungsanordnung mit einem ersten Verkleidungsteil 1, einem zweiten Verkleidungsteil 2 und einem in Fig. 2 gezeigten dritten Verkleidungsteil 3 verbunden. Die Verkleidungsanordnung ist aerodynamisch geformt und an einer Unterseite des Fahrwerks 4, annähernd parallel zu einer in einer Fahrwerkslängsebene 14 verlaufenden Fahrwerkslängsachse 22 angeordnet.

Das erste Verkleidungsteil 1 ist an jener dem zweiten Verkleidungsteil 2 abgewandten Seite nach oben gekrümmt ausgebildet. Über ein erstes Lager 5 des ersten Verkleidungsteils 1, das eine im Bereich einer Querstrebe 34 mit einer ersten Längsversteifungsrippe 23 verschweißte erste Führungskonsole 31, eine in Fig. 2 sichtbare, zweite Führungskonsole 32 sowie, ebenfalls in Fig. 2 gezeigt, eine erste Schelle 15, eine zweite Schelle 16, eine dritte Schelle 17 und eine vierte Schelle 18 aufweist, ist das erste Verkleidungsteil 1 mit einem ersten Wankstabilisator 19 verbunden. Ein entlang einer in Fig. 2 dargestellten ersten Lager-Querachse 12 des Fahrwerks 4 verlaufender Torsionsstab des ersten Wankstabilisators 19 ist durch die erste Führungskonsole 31, die zweite Führungskonsole 32 sowie die erste Schelle 15, die zweite Schelle 16, die dritte Schelle 17 und die vierte Schelle 18 hindurch geführt. Die erste Schelle 15, die zweite Schelle 16, die dritte Schelle 17 und die vierte Schelle 18 sind in den Torsionsstab eingehängt. Somit ist das erste Verkleidungsteil 1 gelenkig bzw. drehbar bezüglich der ersten Lager-Querachse 12 gelagert.

Der erste Wankstabilisator 19 ist über einen ersten Hebel und einen zweiten Hebel mit dem Torsionsstab verbunden. Der erste Hebel ist mit einem dritten Hebel verbunden, der zweite Hebel mit einem vierten Hebel. Der dritte Hebel ist mit dem ersten Radsatzlagergehäuse 21 verbunden, der vierte Hebel mit dem zweiten Radsatzlagergehäuse. Somit ist das erste Verkleidungsteil 1 mittels des ersten Lagers 5 mit einer mit der ersten Radsatzlagerung des Fahrwerks 4 gekoppelten Komponente verbunden.

Erfindungsgemäß ist es auch vorstellbar, dass das erste Verkleidungsteil 1 mittels des ersten Lagers 5 über die erste Führungskonsole 31 unmittelbar gelenkig mit dem ersten Radsatzlagergehäuse 21 und über die zweite Führungskonsole 32 unmittelbar gelenkig mit dem zweiten Radsatzlagergehäuse verbunden ist. Für diese, alternative Ausführungsvariante kann auf die erste Schelle 15, die zweite Schelle 16, die dritte Schelle 17 und die vierte Schelle 18 verzichtet werden.

Weiterhin ist es möglich, zwischen der ersten Führungskonsole 31 und dem ersten Radsatzlagergehäuse 21 ein erstes Kraftübertragungsglied (z.B. eine erste Stange bzw. eine erste Strebe) und der zweiten Führungskonsole 32 und dem zweiten Radsatzlagergehäuse ein zweites Kraftübertragungsglied (z.B. eine zweite Stange bzw. eine zweite Strebe) anzuordnen.

Mittels eines als erste Zug-Druck-Stange ausgeführten zweiten Lagers 6 und eines als zweite Zug-Druck-Stange ausgeführten dritten Lagers 7, welche in Fig. 2 sichtbar sind, ist das erste Verkleidungsteil 1 mit der ersten Antriebseinheit 20, d.h. mit einer auf dem ersten Radsatz 11 gelagerten Komponente bzw. einer Radsatzkomponente verbunden. Die erste Zug-Druck-Stange und die zweite Zug-Druck-Stange sind gelenkig mit einem Träger 33 des ersten Verkleidungsteils 1 einerseits und gelenkig mit der ersten Antriebseinheit 20 andererseits verbunden. Das erste Verkleidungsteil 1 ist somit mechanisch entkoppelt bezüglich Bewegungsrichtungen parallel zu der Fahrwerkslängsebene 14 gelagert.

Das erste Verkleidungsteil 1 ist über ein in Fig. 2 sichtbares erstes Scharnier 38 mit dem zweiten Verkleidungsteil 2 gelenkig, d.h. drehbar um eine Achse parallel zu der ersten Lager-Querachse 12, verbunden. Das zweite Verkleidungsteil 2 weist eine erste Notfangvorrichtung 37 sowie weitere Notfangvorrichtungen, welche in Fig. 2 sichtbar sind, auf.

Das dritte Verkleidungsteil 3 ist im Hinblick auf seine konstruktiven Eigenschaften und seine Verbindung mit dem Fahrwerk 4 und mit dem zweiten Verkleidungsteil 2 gleich wie das erste Verkleidungsteil 1 ausgeführt. Das dritte Verkleidungsteil 3 weist für dessen Verbindung mit dem Fahrwerk 4 ein viertes Lager 8, ein fünftes Lager 9 und ein sechstes Lager 10 auf, die in Fig. 2 dargestellt sind, sowie für dessen Kopplung mit dem zweiten Verkleidungsteil 2 ein zweites Scharnier 39, das ebenfalls in Fig. 2 gezeigt ist.

Das erste Lager 5, das zweite Lager 6, das dritte Lager 7, das vierte Lager 8, das fünfte Lager 9 und das sechste Lager 10 bilden die Lagervorrichtung der erfindungsgemäßen Verkleidungsanordnung.

Versagt die Lagervorrichtung oder wird diese während eines Demontagevorgangs der Verkleidungsanordnung gelöst, so hängt die Verkleidungsanordnung über Fangbolzen der ersten Notfangvorrichtung 37 sowie der weiteren Notfangvorrichtungen an dem Fahrwerksrahmen 28. Ein Herunterfallen der Verkleidungsanordnung ist somit vermieden. Weiterhin bewirken nicht dargestellte, als Gummipuffer ausgeführte Anschläge zwischen dem zweiten Verkleidungsteil 2 einerseits und dem ersten Verkleidungsteil 1 sowie dem dritten Verkleidungsteil 3 andererseits, dass das erste Verkleidungsteil 1 und das dritte Verkleidungsteil 3 bei gelöster Lagervorrichtung nur um einen definierten Winkel nach unten ausschwenken können. Somit sind unbeabsichtigte Berührungen zwischen der Verkleidungsanordnung und einem Gleis oder einem Gleisbett etc. verhindert.

Fig. 2 zeigt jene Ausführungsvariante einer erfindungsgemäßen Verkleidungsanordnung, welche auch in Fig. 1 dargestellt ist, als Schrägriss.

Diese Ausführungsvariante kann insbesondere zur Verkleidung von Triebfahrwerken, d.h. von angetriebenen Fahrwerken, eingesetzt sein.

Die Verkleidungsanordnung ist dreiteilig ausgeführt und weist ein erstes Verkleidungsteil 1, ein zweites Verkleidungsteil 2 und ein drittes Verkleidungsteil 3 auf. Das zweite Verkleidungsteil 2 ist mittels eines ersten Scharniers 38 gelenkig mit dem ersten Verkleidungsteil 1 und mittels eines zweiten Scharniers 39 gelenkig mit dem dritten Verkleidungsteil 3 gekoppelt.

Die Verkleidungsanordnung ist aus Stahl- und Aluminiumblechen gefertigt. Erfindungsgemäß ist es jedoch auch vorstellbar, die Verkleidungsanordnung in Verbundmaterialien oder in Laminat auszuführen.

Das erste Verkleidungsteil 1 ist über ein erstes Lager 5 mit einem in Fig. 2 nicht gezeigten, ersten Wankstabilisator 19 eines Fahrwerks 4, von dem in Fig. 2 nur eine in einer Fahrwerkslängsebene 14 verlaufende Fahrwerkslängsachse 22 gezeigt ist, verbunden. Der erste Wankstabilisator 19 ist wiederum mit einem ersten Radsatzlagergehäuse 21 und einem zweiten Radsatzlagergehäuse, welche einer ersten Radsatzlagerung des Fahrwerks 4 zugeordnet sind, gekoppelt. Das erste Lager 5 weist eine gelochte erste Führungskonsole 31 und eine gelochte zweite Führungskonsole 32 sowie eine erste Schelle 15, eine zweite Schelle 16, eine dritte Schelle 17 sowie eine vierte Schelle 18 auf. Die erste Schelle 15 ist mit einer ersten Längsversteifungsrippe 23, die vierte Schelle 18 mit einer zweiten Längsversteifungsrippe 24 des ersten Verkleidungsteils 1 verschweißt. Die zweite Schelle 16 und die dritte Schelle 17 sind unmittelbar mit dem ersten Verkleidungsteil 1 verschweißt, da in deren Bereich keine Längsversteifungsrippen verlaufen.

Unmittelbar unter der ersten Schelle 15, der zweiten Schelle 16, der dritten Schelle 17 und der vierten Schelle 18 verläuft eine mit dem ersten Verkleidungsteil 1 verschweißte Querstrebe 34.

Durch die erste Führungskonsole 31 und die zweite Führungskonsole 32 hindurch ist ein entlang einer ersten Lager-Querachse 12 ausgerichteter Torsionsstab des ersten Wankstabilisators 19 geführt. Die erste Schelle 15, die zweite Schelle 16, die dritte Schelle 17 und die vierte Schelle 18 sind hakenförmig ausgeführt und in den Torsionsstab eingehängt. Somit ist das erste Verkleidungsteil 1 mittels des ersten Lagers 5 drehbar mit dem Fahrwerk 4 bzw. mit einer mit der ersten Radsatzlagerung verbundenen Komponente des Fahrwerks 4 gekoppelt.

Die Verkleidungsanordnung weist ein als erste Zug-Druck-Stange ausgebildetes zweites Lager 6 und ein als zweite Zug-Druck-Stange ausgeführtes drittes Lager 7 auf. Die erste Zug-Druck-Stange und die zweite Zug-Druck-Stange sind an ihren Unterseiten gelenkig um eine Achse parallel zu der ersten Lager-Querachse 12 an einen mit dem ersten Verkleidungsteil 1 verschweißten Träger 33 gekoppelt und an ihren Oberseiten ebenfalls gelenkig um eine Achse parallel zu der ersten Lager-Querachse 12 mit nicht dargestellten Adaptern verbunden, welche mit einer in Fig. 1 gezeigten ersten Antriebseinheit 20, die mit einem ebenfalls in Fig. 1 dargestellten ersten Radsatz 11 gekoppelt ist, verschweißt sind.

Das erste Verkleidungsteil 1 ist somit mittels des zweiten Lagers 6 und des dritten Lagers 7 in Bewegungsrichtungen parallel zu der Fahrwerkslängsebene 14 mechanisch entkoppelt gelagert.

Die erste Längsversteifungsrippe 23 und die zweite Längsversteifungsrippe 24 sind annähernd parallel zu einer Verkleidungslängsachse 27 ausgerichtet. Zwischen der ersten Längsversteifungsrippe 23 und der zweiten Längsversteifungsrippe 24 ist Bauraum für die erste Antriebseinheit 20 vorgesehen. Aufgrund der ersten Längsversteifungsrippe 23 und der zweiten Längsversteifungsrippe 24 weist das erste Verkleidungsteil 1 eine hohe Widerstandsfähigkeit gegen Biegungen um Achsen parallel zu der ersten Lager-Querachse 12 auf und ist dennoch verwindeweich in Bezug auf Biegungen um Achsen parallel zu der Verkleidungslängsachse 27.

Das zweite Verkleidungsteil 2 weist eine erste Notfangvorrichtung 37 sowie weitere Notfanvorrichtungen mit in einen in Fig. 1 gezeigten Fahrwerksrahmen 28 des Fahrwerks 4 ragenden Fangbolzen auf. Die erste Notfangvorrichtung 37 sowie die weiteren Notfangvorrichtungen sind hinsichtlich ihrer funktionellen Eigenschaften im Zusammenhang mit Fig. 1 beschrieben.

Das zweite Verkleidungsteil 2 weist zur Verbesserung seiner mechanischen Eigenschaften eine erste Längsversteifungsstrebe 35 und weitere Längsversteifungsstreben sowie eine erste Querversteifungsrippe 36 sowie weitere Querversteifungsrippen auf.

Das dritte Verkleidungsteil 3 ist hinsichtlich seiner konstruktiven und funktionellen Eigenschaften gleich wie das erste Verkleidungsteil 1 ausgebildet.

Das dritte Verkleidungsteil 3 weist ein viertes Lager 8 auf, über das es drehbar bezüglich einer zweiten Lager-Querachse 13 mit einem nicht gezeigten zweiten Wankstabilisator einer zweiten Radsatzlagerung des Fahrwerks 4 verbunden ist. Weiterhin sind ein als dritte Zug-Druck-Stange ausgebildetes fünftes Lager 9 und ein als vierte Zug-Druck-Stange ausgeführtes sechstes Lager 10 vorgesehen, über welche das dritte Verkleidungsteil 3 gelenkig mit einer nicht dargestellten zweiten Antriebseinheit des Fahrwerks 4 verbunden ist.

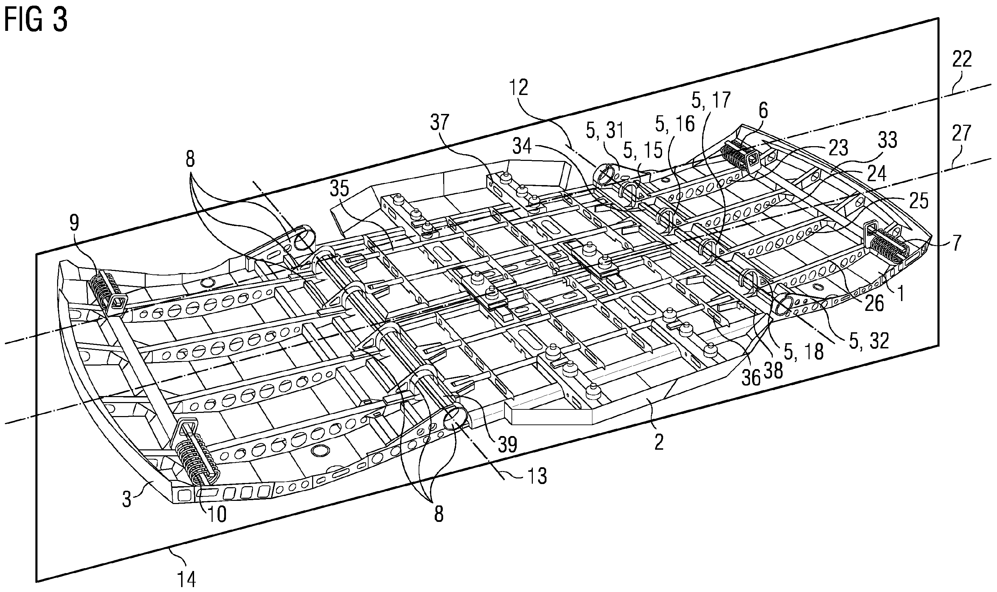

Fig. 3 zeigt eine beispielhafte zweite Ausführungsvariante einer erfindungsgemäßen Verkleidungsanordnung, welche hinsichtlich ihrer konstruktiven und funktionellen Eigenschaften ähnlich wie jene Ausführungsvariante, die in Fig. 1 und Fig. 2 dargestellt ist, ausgeführt ist. Es sind daher in Fig. 3 teilweise die gleichen Bezugszeichen wie in Fig. 1 und Fig. 2 eingesetzt.

Diese zweite Ausführungsvariante kann insbesondere zur Verkleidung von Lauffahrwerken, d.h. von antriebslosen Fahrwerken, eingesetzt sein.

Im Unterschied zu Fig. 1 und Fig. 2 weist die in Fig. 3 dargestellte Verkleidungsanordnung auf einem ersten Verkleidungsteil 1 ein zweites Lager 6 und ein drittes Lager 7 sowie auf einem dritten Verkleidungsteil 3 ein fünftes Lager 9 und ein sechstes Lager 10 auf, die als Drahtseildämpfer ausgeführt sind.

Diese Drahtseildämpfer weisen Windungen sowie an ihren Unterseiten und Oberseiten Montagebalken auf.

Über die Montagebalken auf den Unterseiten sind die Drahtseildämpfer mit der Verkleidungsanordnung verschraubt.

Längsachsen dieser Drahtseildämpfer verlaufen parallel zu einer ersten Lager-Querachse 12 bzw. einer zweiten Lager-Querachse 13.

Die Drahtseildämpfer sind über die Montagebalken auf ihren Oberseiten mit einer ersten Radsatzlagerung bzw. mit einer zweiten Radsatzlagerung eines Lauffahrwerks eines Schienenfahrzeugs, von dem in Fig. 3 nur eine in einer Fahrwerkslängsebene 14 verlaufende Fahrwerkslängsachse 22 dargestellt ist, verschraubt. Das zweite Lager 6 ist mit einem ersten Radsatzlagergehäuse 21 verbunden, das dritte Lager 7 mit einem zweiten Radsatzlagergehäuse, das fünfte Lager 9 mit einem dritten Radsatzlagergehäuse und das sechste Lager 10 mit einem vierten Radsatzlagergehäuse. Erfindungsgemäß sind zwischen den Drahtseildämpfern und der Verkleidungsanordnung bzw. der ersten Radsatzlagerung und der zweiten Radsatzlagerung auch Schweißverbindungen denkbar.

Die Drahtseildämpfer bewirken eine gewisse Beweglichkeit der Verkleidungsanordnung sowie eine Schwingungsdämpfung in alle drei Raumrichtungen.

Die Drahtseildämpfer sind in Richtung ihrer Längsachsen (d.h. in Richtung ihrer Windungsverläufe) steifer ausgeführt als orthogonal auf die Längsachsen, wodurch die Beweglichkeit der Verkleidungsanordnung in Richtungen parallel zu der Fahrwerkslängsebene 14 größer ist als orthogonal auf die Fahrwerkslängsebene 14.

Weiterhin sind mit dem ersten Verkleidungsteil 1 eine erste Längsversteifungsrippe 23, eine zweite Längsversteifungsrippe 24, eine dritte Längsversteifungsrippe 25 sowie eine vierte Längsversteifungsrippe 26 verschweißt, welche annähernd parallel zu einer Verkleidungslängsachse 27 ausgerichtet sind. Mit dem dritten Verkleidungsteil 3 sind weitere Längsversteifungsrippen verbunden, welche ebenfalls annähernd parallel zu der Verkleidungslängsachse 27 verlaufen.

### Liste der Bezeichnungen

- 1: Erstes Verkleidungsteil
- 2: Zweites Verkleidungsteil
- 3: Drittes Verkleidungsteil
- 4: Fahrwerk
- 5: Erstes Lager
- 6: Zweites Lager
- 7: Drittes Lager
- 8: Viertes Lager
- 9: Fünftes Lager
- 10: Sechstes Lager
- 11: Erster Radsatz
- 12: Erste Lager-Querachse
- 13: Zweite Lager-Querachse
- 14: Fahrwerkslängsebene
- 15: Erste Schelle
- 16: Zweite Schelle
- 17: Dritte Schelle
- 18: Vierte Schelle
- 19: Erster Wankstabilisator
- 20: Erste Antriebseinheit
- 21: Erstes Radsatzlagergehäuse
- 22: Fahrwerkslängsachse
- 23: Erste Längsversteifungsrippe
- 24: Zweite Längsversteifungsrippe
- 25: Dritte Längsversteifungsrippe
- 26: Vierte Längsversteifungsrippe
- 27: Verkleidungslängsachse
- 28: Fahrwerksrahmen
- 29: Erstes Rad
- 30: Erste Primärfeder
- 31: Erste Führungskonsole
- 32: Zweite Führungskonsole
- 33: Träger
- 34: Querstrebe
- 35: Erste Längsversteifungsstrebe
- 36: Erste Querversteifungsrippe
- 37: Erste Notfangvorrichtung
- 38: Erstes Scharnier
- 39: Zweites Scharnier

## Patentansprüche

1. Schienenfahrzeug mit einer Verkleidungsanordnung mit zumindest einem ersten Verkleidungsteil, die mittels einer Lagervorrichtung mit einem Fahrwerk des Schienenfahrzeugs verbunden ist, **dadurch gekennzeichnet,**
**dass** die Lagervorrichtung zumindest ein erstes Lager (5), ein zweites Lager (6) sowie ein drittes Lager (7) aufweist, welche mit zumindest einer mit einem ersten Radsatz (11) oder einer ersten Radsatzlagerung des Fahrwerks (4) gekoppelten Komponente verbunden sind,
**dass** das zumindest erste Verkleidungsteil (1) mittels des zumindest ersten Lagers (5) gelenkig und drehbar bezüglich einer ersten Lager-Querachse (12) des Fahrwerks (4) gelagert ist, und
**dass** das zumindest erste Verkleidungsteil (1) mittels des zweiten Lagers (6) und des dritten Lagers (7) mechanisch entkoppelt bezüglich Bewegungsrichtungen parallel zu einer Fahrwerkslängsebene (14) gelagert ist, wobei das zumindest erste Lager (5) zumindest eine erste Schelle (15) aufweist, mittels welcher das zumindest erste Verkleidungsteil (1) mit einem ersten Wankstabilisator (19) des Fahrwerks (4) verbunden ist.

2. Schienenfahrzeug nach Anspruch 1, **dadurch gekennzeichnet, dass** das zweite Lager (6) und das dritte Lager (7) als Zug-Druck-Stangen ausgeführt sind.

3. Schienenfahrzeug nach Anspruch 1, **dadurch gekennzeichnet, dass** das zweite Lager (6) und das dritte Lager (7) als Drahtseildämpfer ausgebildet sind.

4. Schienenfahrzeug nach einem der Ansprüche 1 bis 3, **dadurch gekennzeichnet, dass** das zweite Lager (6) und das dritte Lager (7) mit einer ersten Antriebseinheit (20) des Fahrwerks (4) verbunden sind.

5. Schienenfahrzeug nach einem der Ansprüche 1 bis 3, **dadurch gekennzeichnet, dass** das zweite Lager (6) mit einem ersten Radsatzlagergehäuse (21) des Fahrwerks (4) verbunden ist und das dritte Lager (7) mit einem zweiten Radsatzlagergehäuse des Fahrwerks (4) verbunden ist.

6. Schienenfahrzeug nach einem der Ansprüche 1 bis 5, **dadurch gekennzeichnet, dass** das zumindest erste Verkleidungsteil (1) mittels des zweiten Lagers (6) und des dritten Lagers (7) in Richtung einer Fahrwerkslängsachse (22) mechanisch entkoppelt gelagert ist.

7. Schienenfahrzeug nach einem der Ansprüche 1 bis 6, **dadurch gekennzeichnet, dass** das zumindest erste Verkleidungsteil (1) ausschließlich Versteifungsrippen aufweist, welche annähernd in Richtung einer Verkleidungslängsachse (27) verlaufen.

8. Schienenfahrzeug nach einem der Ansprüche 1 bis 7, **dadurch gekennzeichnet, dass** das Fahrwerk ein innengelagertes Fahrwerk ist.

## Claims

1. Rail vehicle with a trim assembly having at least one first trim part, which trim assembly is connected to an undercarriage of the rail vehicle by means of a bearing device, **characterised in that**
the bearing device has at least a first bearing (5), a second bearing (6) and a third bearing (7), which are connected to at least one component coupled to a first wheelset (11) or a first wheelset bearing system of the undercarriage (4),
the at least first trim part (1) is mounted in an articulated and rotatable manner with respect to a first bearing transverse axis (12) of the undercarriage (4) by means of the at least first bearing (5), and
the at least first trim part (1) is mounted with mechanical decoupling with respect to directions of motion parallel to an undercarriage longitudinal plane (14) by means of the second bearing (6) and the third bearing (7), wherein the at least first bearing (5) has at least one first clamp (15), by means of which the at least first trim part (1) is connected to a first roll stabiliser (19) of the undercarriage (4).

2. Rail vehicle according to claim 1, **characterised in that** the second bearing (6) and the third bearing (7) are embodied as traction-pressure rods.

3. Rail vehicle according to claim 1, **characterised in that** the second bearing (6) and the third bearing (7) are embodied as wire cable dampers.

4. Rail vehicle according to one of claims 1 to 3,
**characterised in that** the second bearing (6) and the third bearing (7) are connected to a first drive unit (20) of the undercarriage (4).

5. Rail vehicle according to one of claims 1 to 3,
**characterised in that** the second bearing (6) is connected to a first wheelset bearing housing (21) of the undercarriage (4) and the third bearing (7) is connected to a second wheelset bearing housing of the undercarriage (4).

6. Rail vehicle according to one of claims 1 to 5,
**characterised in that** the at least first trim part (1) is mounted with mechanical decoupling in the direction of an undercarriage longitudinal axis (22) by means of the second bearing (6) and the third bearing (7).

7. Rail vehicle according to one of claims 1 to 6,
**characterised in that** the at least first trim part (1) exclusively has reinforcing ribs which run approximately in the direction of a trim longitudinal axis (27).

8. Rail vehicle according to one of claims 1 to 7,
**characterised in that** the undercarriage is an internally mounted undercarriage.

## Revendications

1. Véhicule ferroviaire avec un agencement de revêtement doté d'au moins une première partie de revêtement, lequel est relié à un châssis du véhicule ferroviaire au moyen d'un dispositif de palier, **caractérisé**
**en ce que** le dispositif de palier comprend au moins un premier palier (5), un deuxième palier (6) ainsi qu'un troisième palier (7), lesquels sont reliés à au moins un composant accouplé à un premier essieu monté (11) ou à un premier roulement d'essieu monté du châssis (4),
**en ce que** l'au moins une première partie de revêtement (1) est montée de manière articulée et rotative par rapport à un premier axe transversal de palier (12) du châssis (4) au moyen de l'au moins un premier palier (5), et
**en ce que** l'au moins une première partie de revêtement (1) est montée de manière mécaniquement désaccouplée par rapport aux directions de déplacement parallèlement à un plan longitudinal de châssis (14) au moyen du deuxième palier (6) et du troisième palier (7), dans lequel l'au moins un premier palier (5) comprend au moins un premier collier de serrage (15), au moyen duquel l'au moins une première partie de revêtement (1) est reliée à un premier stabilisateur antiroulis (19) du châssis (4).

2. Véhicule ferroviaire selon la revendication 1, **caractérisé en ce que** le deuxième palier (6) et le troisième palier (7) se présentent sous la forme de barres de traction-compression.

3. Véhicule ferroviaire selon la revendication 1, **caractérisé en ce que** le deuxième palier (6) et le troisième palier (7) sont conçus sous la forme d'amortisseurs à câble métallique.

4. Véhicule ferroviaire selon l'une des revendications 1 à 3, **caractérisé en ce que** le deuxième palier (6) et le troisième palier (7) sont reliés à une première unité d'entraînement (20) du châssis (4).

5. Véhicule ferroviaire selon l'une des revendications 1 à 3, **caractérisé en ce que** le deuxième palier (6) est relié à un premier logement de palier d'essieu monté (21) du châssis (4) et le troisième palier (7) est relié à un deuxième logement de palier d'essieu monté du châssis (4).

6. Véhicule ferroviaire selon l'une des revendications 1 à 5, **caractérisé en ce que** l'au moins une première partie de revêtement (1) est montée de manière mécaniquement désaccouplée dans la direction d'un axe longitudinal de châssis (22) au moyen du deuxième palier (6) et du troisième palier (7).

7. Véhicule ferroviaire selon l'une des revendications 1 à 6, **caractérisé en ce que** l'au moins une première partie de revêtement (1) comprend exclusivement des nervures de renforcement qui s'étendent approximativement dans la direction d'un axe longitudinal de revêtement (27).

8. Véhicule ferroviaire selon l'une des revendications 1 à 7, **caractérisé en ce que** le châssis est un châssis monté à l'intérieur.
